**Europäisches Patentamt**

**European Patent Office**

**Office européen des brevets**

(19)

(11) Veröffentlichungsnummer: **0 011 241**
**B1**

(12) **EUROPÄISCHE PATENTSCHRIFT**

(45) Veröffentlichungstag der Patentschrift:
**10.08.83**

(51) Int. Cl.³: **B 29 B 1/04,** C 08 J 3/20,
C 08 L 23/02, C 08 K 7/00

(21) Anmeldenummer: **79104389.6**

(22) Anmeldetag: **08.11.79**

(54) **Verfahren zum Herstellen kleinteiliger, mit blättchenförmigen Additiven versehener Polyolefin-Formmassen und deren Verwendung zur Herstellung von Formkörpern.**

(30) Priorität: **18.11.78 DE 2850080**

(43) Veröffentlichungstag der Anmeldung:
**28.05.80 Patentblatt 80/11**

(45) Bekanntmachung des Hinweises auf die Patenterteilung:
**10.08.83 Patentblatt 83/32**

(84) Benannte Vertragsstaaten:
**AT BE DE FR GB IT NL**

(56) Entgegenhaltungen:
**DE-B-1 280 546**
**FR-A-1 451 293**
**FR-A-2 310 851**
**GB-A-1 331 310**
**GB-A-1 447 304**
**US-A-4 045 403**

(73) Patentinhaber: **BASF Aktiengesellschaft,
Carl-Bosch-Strasse 38, D-6700 Ludwigshafen (DE)**

(72) Erfinder: **Theysohn, Rainer, Dr. Dipl.-Chem., Bruesseler
Ring 38, D-6700 Ludwigshafen (DE)**
Erfinder: **Zeitler, Gerhard, Dr. Dipl.-Chem.,
Lessingstrasse 11, D-6711 Hessheim (DE)**
Erfinder: **Weiss, Frank, Dr. Dipl.-Ing., Gontardstrasse 4,
D-6800 Mannheim 1 (DE)**
Erfinder: **Seiler, Erhard, Dr. Dipl.-Chem., Erpolzheimer
Strasse 1, D-6700 Ludwigshafen (DE)**

# Verfahren zum Herstellen kleinteiliger, mit blättchenförmigen Additiven versehener Polyolefin-Formmassen und deren Verwendung zur Herstellung von Formkörpern

Die Erfindung betrifft ein Verfahren zum Herstellen kleinteiliger, mit blättchenförmigen Additiven versehener Polyolefin-Formmassen, die aufgebaut sind aus

a) 100 Gew.-Teilen eines kleinteiligen, teilkristallinen Polyolefins, das einen mittleren Teilchendurchmesser im Bereich von 10 bis 5000 µm hat und eine Grenzviskosität $[\eta]$, gemessen in Decalin bei 130 °C, im Bereich von 0,5 bis 15 aufweist,

b) 2 bis 150 Gew.-Teilen eines blättchenförmigen Additivs, das einen mittleren Teilchendurchmesser von < 200 µm, vorzugsweise < 50 µm und eine maximale Blättchendicke < 30 µ, vorzugsweise < 20 µm aufweist, wobei der mittlere Teilchendurchmesser kleiner als ¼, vorzugsweise kleiner als $^1/_{10}$ des mittleren Teilchendurchmessers des Polyolefins (a) ist und eine Erweichungstemperatur besitzt, die mindestens 50 °C über dem Kristallitschmelzpunkt des Polyolefins liegt sowie

c) 2 bis 30 Gew.-Teilen eines globulären Additivs, das einen mittleren Teilchendurchmesser im Bereich von 0,01 bis 10 µm aufweist und eine Erweichungstemperatur besitzt, die mindestens 100 °C über der Kristallitschmelztemperatur des Polyolefins liegt sowie

d) – gegebenenfalls – üblichen Mengen üblicher anderer Zusatz- bzw. Hilfsstoffe,

indem man die Komponenten (a) und (b) sowie – gegebenenfalls – (d) in einer ersten Arbeitsstufe (I) in einem Mischer – gegebenenfalls unter Zu- oder Abfuhr kalorischer Wärme – mischt, wobei man sie

in einer ersten Unterstufe (I.1) bei einer Mischintensität im Bereich von 100 bis 500 Watt pro Liter Nutzinhalt innerhalb einer Zeitspanne von 2 bis 50 Minuten von Umgebungstemperatur – die unterhalb der Kristallitschmelztemperatur des Polyolefins (a) liegt und insbesondere Raumtemperatur ist – auf die Kristallitschmelztemperatur des Polyolefins (a) bringt, unmittelbar darauf

im Verlauf einer zweiten Unterstufe (I.2) auf eine Mischintensität übergeht, die 0,3 bis 0,8 mal so gross ist wie die Mischintensität in der ersten Unterstufe (I.1), und den Mischerinhalt innerhalb einer Zeitspanne von 0,1 bis 20 Minuten von der Kristallitschmelztemperatur des Polyolefins (a) auf eine 3 bis 40 °C darüber liegende Temperatur bringt, und unmittelbar hiernach

in einer zweiten Arbeitsstufe (II) innerhalb einer Zeitspanne von 0,5 bis 30 Sekunden den Mischerinhalt aus dem Mischer austrägt und innerhalb von 120 Sekunden auf eine Temperatur unterhalb der Kristallitschmelztemperatur des Polyolefins (a) bringt.

Bei derartigen ungeformten Polyolefin-Formmassen, die mit blättchenförmigen Additiven versehen sind, handelt es sich um Massen, die in üblichen Spritzguss- oder Extrusionsverfahren zu geformten Polyolefin-Formkörpern, die mit dem Additiv gefüllt sind, verarbeitet werden können.

Die Ausrüstung von Polyolefinmassen mit blättchenförmigen Additiven, wie z.B. mit anorganischen Füllstoffen mit blättchenförmiger Struktur, ist ein bewährtes Verfahren zur Erzielung günstiger Produkteigenschaften, wie grössere Oberflächenhärte, bessere Dimensionsstabilität, geringerer Wärmeausdehnungskoeffizient und vor allem höhere Steifigkeit.

Die Einbringung geeigneter blättchenförmiger Additive in Polyolefine geschieht in der Praxis nach zwei Verfahren. Im ersten und am häufigsten angewendeten Fall wird das Additiv auf Extrudern, Innenmischern oder Schneckenknetern in das aufgeschmolzene Polyolefin eingearbeitet. Die so erhaltenen Granulate können dann in einem weiteren Schritt, z.B. auf Spritzgussmaschinen zu Formkörpern weiterverarbeitet werden. Nachteile dieses Verfahrens sind einmal der relativ hohe Energieaufwand, der zum Aufschmelzen des Polyolefins und zum Schmelzmischen mit dem Additiv notwendig ist, zum anderen der erhebliche technische und finanzielle Aufwand, der aufgrund der meist sehr geringen Schüttdichte der Additive und ihrer Neigung zum Stäuben bei der Einarbeitung getrieben werden muss. Da bei der Einarbeitung zwangsläufig hohe Scherkräfte auftreten, ist dieses Verfahren nicht geeignet bei solchen Polyolefinen, die wegen ihres hohen Molekulargewichts oder wegen partieller Vernetzung durch Scherung geschädigt werden.

Im zweiten Fall geht man von einer weitgehend homogenen mechanischen Trockenmischung aller Komponenten, bestehend aus Polyolefinteilchen und Additiven aus, die nach dem sog. «direct-molding-Verfahren», direkt zu Formkörpern verarbeitet wird. Dieses an sich kostengünstige Verfahren hat allerdings den Nachteil, dass die Homogenität im Fertigteil oftmals unzureichend ist, da Trockenmischungen häufig zur Sedimentation neigen. Zudem erfordert ein solches Verfahren erhebliche Veränderungen an gängigen Spritzgussmaschinen zur Erzielung halbwegs befriedigender Ergebnisse.

Aus der GB-A-1 447 304 ist ein Verfahren zum Herstellen von mit globulären oder blättchenförmigen Additiven versehenen Polyolefingranulaten bekannt, bei dem Polyolefinteilchen mit einer durchschnittlichen Partikelgrösse von beispielsweise 150 µm mit globulären oder blättchenförmigen Additiven mit durchschnittlichen Partikelgrössen von beispielsweise 50 µm vermischt werden, wobei 10 bis 80 Gew.-% des Additivs angewendet werden. Die Vermischung selbst erfolgt in zwei Stufen, wobei in der ersten Stufe gemäss Beispiel 2 im Falle von Niederdruckpolyethylenpulver auf etwa 130 °C bei hoher Mischintensität erhitzt wird und anschliessend in einer zweiten Stufe bei halber Mischintensität die Temperatur auf 140 °C eingestellt wird. Anschliessend wird die Mischung in einen gekühlten Mischer geschüttet und unter Rühren abgekühlt. Bei diesem bekannten Verfahren wird ein Endprodukt erhalten, das einen erheblich höheren Partikeldurchmesser aufweist als das Ausgangsprodukt, nämlich 500 µm bis 20 mm.

Das bekannte Verfahren weist den Nachteil auf, dass die Partikelchen während der Beladung mit Füllstoffen stark anwachsen und agglomerieren, so dass die Weiterverarbeitung des Ausgangs- und des Endprodukts nicht auf gleichen Maschinen bei vergleichbaren Einzugsverhalten und vergleichbaren Zykluszeiten erfolgen kann.

Aufgabe war es daher, ein kostengünstiges, apparativ einfaches und exaktes Verfahren zum Einbringen von blättchenförmigen Additiven in kleinteilige Polyolefin-Formmassen zu entwickeln, das die Nachteile des aus der GB-A-1 447 304 bekannten Verfahrens vermeidet und zu kleinteiligen gefüllten Formmassen führt, die in der Korngrössenverteilung dem eingesetzten feinteiligen Polymeren entsprechen.

Diese Aufgabe wird erfindungsgemäss dadurch gelöst, dass man im Verlauf der zweiten Unterstufe (I.2) – gegebenenfalls einer dritten Unterstufe (I.3) – die 2 bis 30 Gew.-Teile des feinteiligen globulären Additivs (c) in den Mischer zugibt, und dass man – gegebenenfalls – in der dritten Unterstufe (I.3) auf eine Mischintensität übergeht, die 0,5 bis 1,0mal so gross ist wie die Mischintensität in der zweiten Unterstufe (I.2) und den Mischerinhalt für eine Zeitspanne von 0,2 bis 10 Minuten auf der in der zweiten Unterstufe (I.2) erreichten Temperatur hält.

Unter kleinteiligen, teilkristallinen Polyolefinen (a) werden solche verstanden, die einen Teilchendurchmesser im Bereich von 10 bis 5000, vorzugsweise 100 bis 2000 µm aufweisen und deren Grenzviskosität $[\eta]$, (gemessen nach DIN-53 728 in Decalin bei 130 °C) im Bereich von 0,5 bis 15, vorzugsweise 1 bis 10 liegt. Bei den Polyolefinen handelt es sich vorzugsweise um Polyäthylen hoher Dichte (0,93 bis 0,97 g/cm³), und um Polypropylen, insbesondere um ein solches, das nach dem sog. Gasphasenverfahren, wie es z.B. in der DE-B-1 217 071 beschrieben ist, hergestellt wurde, Copolymere von Äthylen und Propylen sofern sie noch kristalline Anteile enthalten, sowie um entsprechende Polymere, die bis zu 5 Gew.-% Acrylsäure aufgepropft enthalten.

Unter teilkristallinen Polyolefinen seien solche verstanden, die bei der DSC-Analyse zumindest einen scharfen Schmelzpeak aufweisen.

Die blättchenförmigen Additive (b) sollen einen mittleren Teilchendurchmesser aufweisen von 0,1 bis 200 µm, vorzugsweise 0,1 bis 50 µm, eine Blättchendicke von 0,001 bis 30 µm, vorzugsweise 0,01 bis 10 µm, wobei der mittlere Teilchendurchmesser kleiner als ¼, vorzugsweise kleiner als ¹/₁₀ des mittleren Teilchendurchmessers des Polyolefins (a) sein soll. Zudem sollen sie einen Schmelz- bzw. Erweichungsbereich besitzen, der mindestens 50 °C über dem Kristallitschmelzpunkt des Polyolefins liegt. In Frage kommen z.B. Talkum, Glimmer, Flake-Glas, Kaolin.

Als globuläres Additiv (c) wird ein solches Additiv verstanden, dessen Gestalt weder eindeutig faserförmig noch blättchenförmig ist, wobei der mittlere Teilchendurchmesser im Bereich von 0,01 bis 10 µm liegt und die Erweichungstemperatur um mindestens 100 °C höher ist als die Kristallitschmelztemperatur des Polyolefins (a). In Frage kommen z.B. calz. Kaolin, Kreide, Bariumsulfat, Zirkonsilikat sowie – gegebenenfalls – Farbpigmente.

Als Hilfs- und Zusatzstoffe (d) kommen in Frage: Anorganische und organische Farbpigmente, Stabilisatoren, Verarbeitungshilfsmittel wie Gleit- und Entformungsmittel, Haft- und Verträglichkeitsvermittler und Treibmittel.

Die Herstellung der Formmassen kann erfolgen in einem Mischer, in dem die Mischflügel senkrecht zur Mischerachse angeordnet sind und wie er z.B. in der DE-B-1 054 073 oder DE-B-1 454 768 beschrieben ist. Derartige Mischer wurden bisher hauptsächlich zur Aufbereitung von nichtkristallinen Thermoplasten mit breitem Erweichungsbereich, wie PVC oder auch ABS, eingesetzt. Sie sind aber auch zum Agglomerieren von schlecht fliessfähigen, feinteiligen Polyolefinen mit breiter Kornverteilung geeignet, wobei ein verengtes gröberes Kornspektrum und ein höheres Schüttgewicht resultiert, so dass auf diese Weise das Verarbeitungsverhalten verbessert werden kann. Es ist zudem bekannt, dass das Agglomerisieren von Kunststoffpartikeln auch in Gegenwart von Zuschlagstoffen geschehen kann. Der Beschreibung der DE-A-2 302 370 ist zu entnehmen, dass bei der Aufbereitung von Polyolefinpulvern in schnellaufenden Mischern, die maximale Temperatur 2 bis 13 °C unterhalb des Schmelzbereichs des Polyolefins liegen sollte, um ein Verkleben bzw. Verklumpen zu vermeiden.

Überraschend wurde nun gefunden, dass es nach dem erfindungsgemässen Verfahren möglich ist, das blättchenförmige Additiv (b) vollständig und irreversibel an die Polyolefinkomponente zu binden, ohne dass eine nennenswerte Agglomeration oder sogar Klumpenbildung stattfindet. Es resultieren hierbei feinteilige, frei fliessende Formmassen mit ähnlicher oder feinerer Kornverteilung wie das eingesetzte Polymere, die das blättchenförmige Additiv (b) vollständig gebunden enthalten, und die sich leicht zu Formkörpern weiterverarbeiten lassen.

Die anmeldungsgemässe Arbeitsweise besteht bevorzugt darin, dass man in der ersten Stufe (I.1) das Gemisch aus (a), (b) und gegebenenfalls (d) mit einer Mischintensität von 200 bis 400 W/l Nutzeinheit innerhalb von 5 bis 20 Minuten von Umgebungstemperatur, die üblicherweise Raumtemperatur ist, auf die Kristallitschmelztemperatur des Polyolefins (a) bringt, anschliessend im Verlauf der zweiten Stufe (I.2) auf eine Mischintensität übergeht, die 0,4 bis 0,7mal so gross ist wie die Mischintensität bei (I.1) und innerhalb einer Zeitspanne von 0,2 bis 10 Minuten von der Kristallitschmelztemperatur des Polyolefins auf eine 5 bis 30 °C darüber liegende Temperatur bringt.

Gegebenenfalls kann sich erfindungsgemäss eine dritte Stufe (I.3) anschliessen, wobei man auf eine Mischintensität übergeht, die vorzugsweise 0,5 bis 0,8mal so gross ist wie die Mischintensität

bei (I.2) und den Mischerinhalt von vorzugsweise 0,2 bis 5 Minuten bei der in Stufe (I.2) erreichten Temperatur hält.

Erfindungsgemäss werden im Verlauf der zweiten Unterstufe (I.2) – gegebenenfalls dritten Unterstufe (I.3) – die 2 bis 30 Gew.-Teile des Additivs (c) in den Mischer zugegeben.

Anschliessend wird in einer zweiten Arbeitsstufe (II) das Produkt innerhalb von vorzugsweise 0,5 bis 10 Sekunden aus dem Mischer ausgetragen und auf eine Temperatur unterhalb des Polymerschmelzpunktes abgekühlt.

Die Verfahrensweise der dritten Unterstufe ist dann gegeben, wenn geringe Gehalte an blättchenförmigen Additiven, in Relation zu den globulären Additiven, erwünscht sind.

Die Mischintensität in Watt pro Liter (W/l) Nutzinhalt ist definiert als die Energieaufnahme (in Watt) bezogen auf 1 Liter des Volumens, die die Komponenten (a), (b), (c) und gegebenenfalls (d) im Mischer einnehmen.

Das beschriebene Verfahren ist apparativ und energetisch weit weniger aufwendig als z.B. eine Extruderkonfektionierung. Es erlaubt zudem eine einfache und exakte Einbringung der Komponenten blättchenförmige Additive und globuläres Additiv und gegebenenfalls Zuschläge ohne komplizierte Dosiertechnik, zudem staubfrei. Darüber hinaus hat das Verfahren den Vorteil, dass es möglich ist, blättchenförmige Füllstoffe in ansonsten schwer verarbeitbare Thermoplaste wie ultrahochmolekulares Polyäthylen ohne Schädigung der Polymeren einzubringen.

Das Verfahren hat jedoch noch einen weiteren Vorteil: Durch die gezielte Ausführungsform findet in den meisten Fällen eine Delaminierung des blättchenförmigen Additivs statt, ohne dass der Blättchendurchmesser nennenswert verkleinert wird. Dies bedeutet eine Erhöhung des sogenannten «Seitenverhältnisses» (Verhältnis von Blättchendurchmesser zu Blättchendicke), was vor allem in bezug auf Steifigkeit und Zähigkeit der Formmassen sehr günstig ist.

Die kleinteiligen, mit blättchenförmigen Additiven versehenen Polyolefin-Formmassen können verwendet werden zur Herstellung von Formkörpern nach den üblichen Spritzguss-, Extrusions- oder Hohlkörperblasverfahren.

Das folgende Beispiel verdeutlicht das oben genannte Verfahren:

Beispiel

Ausgangsmaterial ist ein Gemisch aus

a) 25 kg (entsprechend 100 Gew.-Teilen) eines kleinteiligen Polyäthylens, das einen Teilchendurchmesser im Bereich von 250 bis 2000 µm hat und einen mittleren Teilchendurchmesser von 800 µm hat und eine Grenzviskosität von 4,8 aufweist,

b) 10,7 kg (entsprechend 42,8 Gew.-Teilen) Talkum, das einen maximalen Teilchendurchmesser von 20 µm hat, eine maximale Dicke von 2 µm und einen mittleren Teilchendurchmesser (= 10 µm) aufweist, der 1:80mal so gross ist wie der mittlere Teilchendurchmesser des Polyäthylens (a).

Das vorgenannte Gemisch wird

I in einer ersten Arbeitsstufe in einem Mischer von 100 l Nutzinhalt – ohne Zu- oder Abfuhr kalorischer Wärme –,

(I.1) in einer ersten Unterstufe bei einer Mischintensität von 254 W/l Nutzinhalt innerhalb einer Zeitspanne von 12 Minuten von Umgebungstemperatur (= Raumtemperatur) auf die Kristallitschmelztemperatur des Polyäthylens (a) (= ~ 138°C) gebracht; unmittelbar darauf

(I.2) im Verlauf von einer zweiten Unterstufe bei einer Mischintensität die im Mittel 0,63mal so gross ist wie die Mischintensität in der ersten Unterstufe (I.1), innerhalb einer Zeitspanne von 6 Minuten von der Kristallitschmelztemperatur des Polyäthylens (a) auf eine 34°C darüber liegende Temperatur (= 172°C) gebracht; wobei kontinuierlich über diese Zeitspanne verteilt insgesamt 0,5 kg eines calz.-Kaolins von einer mittleren Korngrösse von 1 µm zugegeben werden; und unmittelbar hiernach

(II) in einer zweiten Arbeitsstufe innerhalb einer Zeitspanne von 5 Sekunden aus dem Mischer ausgetragen und innerhalb von 30 Sekunden auf eine Temperatur (= 80°C) unterhalb der Kristallitschmelztemperatur des Polyäthylens (a) gebracht.

Das erhaltene feinteilige Produkt ist praktisch frei an ungebundenen Additiven, weist eine Kornverteilung auf, die praktisch der des eingesetzten Polyäthylens (a) entspricht und zeichnet sich durch gute Rieselfähigkeit sowie das weitgehende Fehlen elektrostatischer Aufladungseffekte aus.

**Patentansprüche**

1. Verfahren zum Herstellen kleinteiliger, mit blättchenförmigen Additiven versehener Polyolefin-Formmassen, die aufgebaut sind aus

a) 100 Gew.-Teilen eines kleinteiligen, teilkristallinen Polyolefins, das einen mittleren Teilchendurchmesser im Bereich von 10 bis 5000 µm hat und eine Grenzviskosität [η], gemessen in Decalin bei 130°C, im Bereich von 0,5 bis 15 aufweist,

b) 2 bis 150 Gew.-Teilen eines blättchenförmigen Additivs, das einen mittleren Teilchendurchmesser von < 200 µm, vorzugsweise < 50 µm, und eine maximale Blättchendicke < 30 µm, vorzugsweise < 10 µm aufweist, wobei der mittlere Teilchendurchmesser kleiner als ¼, vorzugsweise kleiner als $1/10$ des mittleren Teilchendurchmessers des Polyolefins (a) ist und eine Erweichungstemperatur besitzt, die mindestens 50°C über dem Kristallitschmelzpunkt des Polyolefins liegt, sowie

c) 2 bis 30 Gew.-Teile eines globulären Additivs, das einen mittleren Teilchendurchmesser im Bereich von 0,01 bis 10 µm aufweist und eine Erweichungstemperatur besitzt, die mindestens 100°C über der Kristallitschmelztemperatur des Polyolefins liegt, sowie

d) – gegebenenfalls – üblichen Mengen üblicher anderer Zusatz- bzw. Hilfsstoffe,

indem man die Komponenten (a) und (b) sowie – gegebenenfalls – (d) in einer ersten Arbeitsstufe (I) in einem Mischer – gegebenenfalls unter Zu- oder Abfuhr kalorischer Wärme – mischt, wobei man sie

in einer ersten Unterstufe (I.1) bei einer Misch- intensität im Bereich von 100 bis 500 Watt pro Liter Nutzinhalt innerhalb einer Zeitspanne von 2 bis 50 Minuten von Umgebungstemperatur – die unter- halb der Kristallitschmelztemperatur des Polyole- fins (a) liegt und insbesondere Raumtemperatur ist – auf die Kristallitschmelztemperatur des Polyolefins (a) bringt, unmittelbar darauf

im Verlauf einer zweiten Unterstufe (I.2) auf eine Mischintensität übergeht, die 0,3 bis 0,8mal so gross ist wie die Mischintensität in der ersten Unterstufe (I.1), und den Mischerinhalt innerhalb einer Zeitspanne von 0,1 bis 20 Minuten von der Kristallitschmelztemperatur des Polyolefins (a) auf eine 3 bis 40 °C darüber liegende Temperatur bringt, und unmittelbar hiernach

in einer zweiten Arbeitsstufe (II) innerhalb einer Zeitspanne von 0,5 bis 30 Sekunden den Mischerinhalt aus dem Mischer austrägt und innerhalb von 120 Sekunden auf eine Temperatur unter- halb der Kristallitschmelztemperatur des Polyole- fins (a) bringt,

dadurch gekennzeichnet, dass man im Verlauf der zweiten Unterstufe (I.2) – gegebenenfalls ei- ner dritten Unterstufe (I.3) – die 2 bis 30 Gew.-Teile des feinteiligen globulären Additivs (c) in den Mischer zugibt, und dass man – gegebenenfalls – in der dritten Unterstufe (I.3) auf eine Mischintensität übergeht, die 0,5 bis 1,0mal so gross ist wie die Mischintensität in der zweiten Unterstufe (I.2), und den Mischerinhalt für eine Zeitspanne von 0,2 bis 10 Minuten auf der in der zweiten Unterstufe (I.2) erreichten Temperatur hält.

2. Verwendung kleinteiliger, mit blättchenför- migen Additiven versehener Polyolefin-Formmas- sen nach Anspruch 1 zur Herstellung von Formkörpern nach üblichen Spritzguss-, Extrusions- und Hohlkörperblasverfahren.

**Claims**

1. A process for the preparation of a particulate polyolefin molding material provided with a flaky additive, the molding material comprising

a) 100 parts by weight of a particulate, partially crystalline polyolefin, which has a mean particle diameter of from 10 to 5,000 µm and an intrinsic viscosity [η] measured in decahydronaphthalene at 130 °C, of from 0.5 to 15, and

b) from 2 to 150 parts by weight of a flaky ad- ditive, which has a mean particle diameter of 200 µm, preferably of < 50 µm (which however is less than ¼, preferably less than $^1/_{10}$, of the mean particle diameter of the polyolefin (a)) and a maximum flake thickness of < 30 µm, preferably 10 µm, and has a softening point at least 50 °C above the crystallite melting point of the polyolefin,

c) from 2 to 30 parts by weight of a globular additive which has a mean particle diameter of from 0.01 to 10 µm and a softening point at least 100 °C above the crystallite melting point of the polyolefin, with or without

d) conventional amounts of conventional other additives or assistants,

by mixing the components (a) and (b), with or without (d), in a first process step (I), in a mixer, with or without the supply or removal of caloric heat, the said step (I) comprising

a first sub-step (I.1) in which the mixture is brought within a period of from 2 to 50 minutes from ambient temperature, which is below the crystallite melting point of the polyolefin (a) and in particular is room temperature, to the crystallite melt- ing point of the polyolefin (a), while being subject- ed to a mixing intensity of from 100 to 500 W/liter of useful mixer capacity, which sub-step is followed immediately

by a second sub-step (I.2) in the course of which the mixing intensity is brought to a value from 0.3 to 0.8 times that of the mixing intensity in the first sub-step (I.1) and the mixture is brought, within a period of from 0.1 to 20 minutes, from the crystallite melting point of the polyolefin (a) to a temperature from 3 to 40 °C above the latter, which second sub-step is immediately followed by a second process step (II) where the material is discharged from the mixer within a period of from 0.5 to 30 seconds and is brought, in the course of 120 seconds, to a temperature below the crystallite melting point of the polyolefin (a), wherein the 2 to 30 parts by weight of the particulate globular additive (c) are introduced into the mixer in the course of the second sub-step (I.2) and an optional third sub-step (I.3), and wherein, if desired, in the third sub-step (I.3) the mixing intensity is brought to a value from 0.5 to 1.0 times that in the second sub-step (I.2), and the mixture is kept for from 0.2 to 10 minutes at the temperature reached in the second sub-step (I.2).

2. The use of a particulate polyolefin molding material, provided with a flaky additive, as claimed in claim 1 for the production of moldings by conventional injection-molding, extrusion or blow-molding methods.

**Revendications**

1. Procédé pour la préparation de matières moulables en petites particules à base de polyoléfines chargées d'additifs lamellaires, matières qui sont composées de

a) 100 parties en poids d'une polyoléfine partiellement cristallisée en petites particules, ayant un diamètre moyen de particules dans la gamme de 10 à 5000 microns et présentant une viscosité limite [η], mesurée dans la décaline à 130 °C, dans la gamme de 0,5 à 15,

b) 2 à 150 parties en poids d'un additif lamellaire qui présente un diamètre moyen de particules de moins de 200 microns, de préférence de moins de 50 microns et une épaisseur maximale de lamelles de moins de 30 microns, de préférence moins de 10 microns, son diamètre moyen de particules étant inférieur à ¼, de préférence inférieur à $^1/_{10}$ du diamètre moyen de particules de la polyoléfine (a), et qui a un point de ramollissement se situant au moins 50 °C au-dessus du point de fusion des cristallites de la polyoléfine,

c) 2 à 30 parties en poids d'un additif globulaire qui présente un diamètre moyen de particules dans la gamme de 0,01 à 10 microns et a une température de ramollissement qui se situe au moins 100 °C au-dessus de la température de fusion des cristallites de la polyoléfine, et

d) – le cas échéant – de quantités habituelles d'autres produits ajoutés ou auxiliaires usuels,

consistant en ce qu'en une première phase opératoire (I), on mélange les constituants (a), (b) et – le cas échéant – (d) dans un mélangeur – éventuellement avec apport ou enlèvement de chaleur, en les amenant, dans une première sous-phase (I.1), de la température ambiante – qui se situe au-dessous de la température de fusion des cristallites de la polyoléfine (a) et est en particulier la température de la pièce – à la température de fusion des cristallites de la polyoléfine (a) en un laps de temps de 2 à 50 minutes, avec une intensité de malaxage dans la gamme de 100 à 500 watts par litre de capacité utile et, immédiatement après, en passant, au cours d'une seconde sous-phase (I.2), à une intensité de malaxage qui est égale à l'intensité de malaxage de la première sous-phase (I.1) multipliée par un facteur de 0,3 à 0,8, et en amenant le contenu du mélangeur, en l'espace de 0,1 à 20 minutes, de la température de fusion des cristallites de la polyoléfine (a) à une température se situant 2 à 40 °C au-dessus, puis, immédiatement après, en une seconde phase opératoire (II), on extrait du mélangeur le contenu de celui-ci en l'espace de 0,5 à 30 secondes et on l'amène, en l'espace de 120 secondes, à une température inférieure à la température de fusion des cristallites de la polyoléfine (a), caractérisé en ce qu'au cours de la seconde sous-phase (I.2) – le cas échéant, au cours d'une troisième sous-phase (I.3) – on introduit dans le mélangeur de 2 à 30 parties de l'additif globulaire en fines particules (c) et en ce que – le cas échéant – on passe, dans la troisième sous-phase (I.3), à une intensité de malaxage qui est égale à l'intensité de malaxage de la seconde sous-phase (I.2) multipliée par un facteur de 0,5 à 1,0 et on maintient le contenu du mélangeur, pendant un laps de temps de 0,2 à 10 minutes, à la température atteinte dans la seconde sous-phase (I.2).

2. Utilisation de matières moulables en petites particules, à base de polyoléfines chargées d'additifs lamellaires selon la revendication 1, pour la fabrication d'objets moulés par des procédés usuels de moulage par injection, d'extrusion et de soufflage de corps creux.